# EUROPEAN PATENT SPECIFICATION

(11) **EP 3 267 589 B1**
(45) Date of publication and mention of the grant of the patent: **08.01.2020**
(21) Application number: 16178121.6
(22) Date of filing: 06.07.2016
(51) Int. Cl.: H04B 1/18, H04B 1/30, G06K 7/10, G06K 19/07, H01Q 1/22, G06K 7/00

(54) **SYSTEM TO PROCESS A HIGH VOLTAGE ANTENNA SIGNAL WITHIN AN INTEGRATED CIRCUIT**
SYSTEM ZUR VERARBEITUNG EINES HOCHSPANNUNGSANTENNENSIGNALS IN EINER INTEGRIERTEN SCHALTUNG
SYSTÈME DE TRAITEMENT D'UN SIGNAL D'ANTENNE HAUTE TENSION DANS UN CIRCUIT INTÉGRÉ

(43) Date of publication of application: 10.01.2018
(73) Proprietor: Panthronics AG, 8041 Graz (AT)
(72) Inventor: Jongsma, Jakob, 8042 Graz (AT); Crols, Jan, 3050 Oud-Heverlee (BE)
(74) Representative: Schwarz & Partner Patentanwälte OG

(56) References cited:
- EP-A1- 2 400 665
- EP-A2- 1 538 546
- US-A1- 2008 238 622
- US-A1- 2010 148 929
- US-A1- 2015 310 237

## Description

### FIELD OF THE INVENTION

The present invention relates to a system of an antenna and an integrated circuit with at least one input pin to receive an antenna signal with a carrier frequency and to demodulate data modulated within the antenna signal, which system comprises an antenna signal processing circuit to process the antenna signal from the antenna and a demodulator to demodulate the processed antenna signal and to provide the received data.

The present invention furthermore relates to a method to receive an antenna signal with a carrier frequency from an antenna and to process it with an integrated circuit to demodulate data modulated within the antenna signal, which method comprises the following steps:
process the antenna signal received from the antenna and provide a processed antenna signal; demodulate the processed antenna signal and provide the received data.

### BACKGROUND OF THE INVENTION

Such a system has been sold by company NXP Semiconductors with an integrated circuit type PN5180 to be used in an NFC/HF reader. This radio frequency identification (RFID) reader is used for payment applications. The RFID reader communicates with active or passive transponders or smart cards. In a typical application a passive smart card stores payment information of a user to electronically pay with the smart card. The reader is powered and generates a high frequency (HF) magnetic field with its antenna. When the reader and the smart card are within close proximity of each other, the reader generated magnetic field is induced into the antenna of the smart card and used to power the smart card. The smart card also has a transceiver to receive the signal from the reader and to transmit a response back to the reader.

There are standards like ISO/IEC18000-3 or ISO/IEC 14.443 Type A and B or ISO15.693 or ECMA-340 13,56 MHz Near Field Communication (NFC) or company standards like Felica from company Sony that define protocols and types of modulation used to transmit information between the tag or smart card and the reader. Some or all of these standards define that the reader transmits data to the tags by changing the magnitude of its transmitted power. Tags receive the transmitted signal and process the received data. The activated tag or smart card then replies by transmitting data to the reader. A typical technique is to use load modulation, for which the tag varies the load impedance of its coil by changing its resonance frequency and its quality factor. This action causes a voltage variation at the reader antenna.

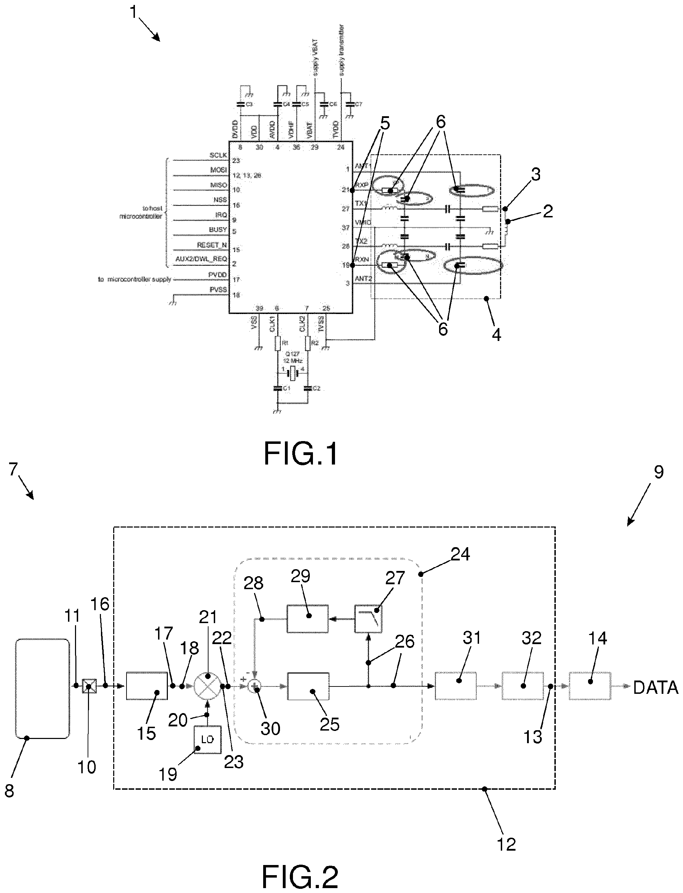

Figure 1 shows above referenced state of the art integrated circuit 1 PN5180 that is connected to an antenna 2 to receive an antenna signal 3 with a carrier frequency of 13,56MHz and to demodulate data modulated within the antenna signal 3. An antenna signal processing circuit is partially realized within the integrated circuit 1 and partially realized as external components 4. Depending on the application where the integrated circuit is used different signal ranges and dynamic ranges of the antenna signal 3 occur. As antenna input pins 5 of the integrated circuit 1 may only process antenna signals 3 up to a voltage of e.g. 5 Volt voltage dividers 6 realized by capacities and resistors are needed to reduce the voltage of the antenna signal 3 so that the integrated circuit 1 may process the antenna signal 3 without damage of the integrated circuit 1. Further processing and demodulation of the processed antenna signal is done within the integrated circuit 1.

Drawback of this known system is that the number of external components 4 that need to be connected to the integrated circuit increases the area on the printed circuit board and therefore the cost to implement the integrated circuit 1. As the external components 4 need to be adapted to the application realized with the integrated circuit 1 there is a risk of wrong external components chosen and connected to the integrated circuit 1 what may result in damage of the integrated circuit 1. Due to the external voltage dividers the dynamic range is limited as these may cause that only a week antenna signal 3 is fed into the input pins 5 of the integrated circuit 1 for further processing.

EP 1 538 546 A2 discloses a low voltage signal stripping circuit for an RFID reader.

US 2008/238622 A1 discloses a RFID reader with receiver clock derived from transmitter output.

US 2015/310237 A1 discloses a streamlined apparatus and methods for RFID communication.

US 2010/0148929 A1 discloses a multi-protocol radio frequency identification transceiver.

EP 2 400 665 A1 discloses a system of an integrated circuit with an antenna directly connected to the integrated circuit, which integrated circuit comprises a passive impedance transforming network to ensure that active components of the integrated circuit will not be damaged by the high voltage antenna signal. Drawback of this known system is that the passive impedance transformation network comprise a high number of internal components.

### SUMMARY OF THE INVENTION

It is a target of the invention to provide a system of an antenna and an integrated circuit and a method to receive and process an antenna signal in the high frequency range that avoid above stated drawbacks.

This target is achieved with a system where the antenna signal processing circuit realized within the integrated circuit comprises a passive resistor with a first connection connected to the input pin to transfer the high voltage of the antenna signal into a current domain antenna signal at a second connection of the passive resistor, which passive resistor is the only component of the integrated circuit exposed to the high voltage of the antenna signal.

This target is furthermore achieved with a method that furthermore comprises the following steps:
process the high voltage of the antenna signal within the integrated circuit by a transfer of the antenna signal into the current domain using a passive resistor.

The only component exposed to the high voltage of the antenna signal is the passive resistor, which has a breakdown voltage multiple times higher than the breakdown voltage of active components. Therefore this antenna signal processing circuit is suitable for integration in a standard low-voltage silicon process of the integrated circuit. This provides the advantage that the number of external components is reduced what reduces the area on the printed circuit to implement the integrated circuit and the costs linked to it. The reduction of external components furthermore reduces the need to adopt the integrated circuit to different applications the integrated circuit will be used for. As the antenna signal processing circuit processes the antenna signal in the current domain within the integrated circuit, the integrated circuit is able to adopt to a broad voltage range of the antenna signal what enables a high dynamic range and results in correct demodulated received data even in situations with a lot of noise covering the modulated data within the antenna signal.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 shows a system of an antenna and an integrated circuit according to the state of the art.
Figure 2 shows a realization of a system of an antenna and part of an integrated circuit to receive and process an antenna signal with a carrier signal in the high frequency area according to the invention.
Figure 3 shows the principle of an antenna signal processing circuit within an integrated circuit according to the invention.

### DETAILED DESCRIPTION OF EMBODIMENTS

Figure 2 shows part of a RFID reader 7 with an antenna 8. Reader 7 according to this embodiment of the invention communicates with a tag or smart card according to the ECMA-340 13,56 MHz Near Field Communication NFC standard, which NFC Standard incooperates communication based on ISO/IEC 14.443 Type A and B and Felica, a company standard from company Sony. Reader 7 furthermore comprises an oscillator and an amplifier to generate a carrier frequency signal to emit a HF field with 13,56 MHz via antenna 8 and to transmit data to one or more tags or smart cards. Such a tag is for instance disclosed in document US 7,890,080 B2.

When reader 7 and the smart card are within close proximity of each other, reader 7 generated HF field is induced into the antenna of the smart card and used to power the smart card. The smart card also has a transceiver to receive data transmitted within the HF field from reader 7 and to transmit a load modulated response back to reader 7. Load modulation is processed with one of the modulation frequencies defined in the standard like 106, 212, 424 or 848kbps.

Reader 7 comprises an integrated circuit 9 with several pins to receive and provide signals and data. Antenna 8 is directly connected to antenna input pins 10 to receive an antenna signal 11 from the antenna 8. Depending on the strengths of the carrier frequency signal and the objects close by antenna 8 and the noise received with antenna 8, the voltage of the antenna signal 11 may vary from e.g. 100mV to 100 Volt. To avoid that integrated circuit 9 is damaged by a high voltage antenna signal 11, a special antenna signal processing circuit 12 is realized within integrated circuit 9 for each antenna input pin 10 to process antenna signal 11 and to provide a processed antenna signal 13 to demodulator 14. Demodulator 14 demodulates the processed antenna signal 13 with the modulation frequency to provide the data received from the smart card or tag.

Antenna signal processing circuit 12 comprises a resistor 15 with a first connection 16 connected to antenna input pin 10, which resistor 15 may be dimensioned in the range of e.g. 1 or 100 kOhm. Resistor 15 transfers the antenna signal 11 from the voltage domain into the current domain and provides a current domain antenna signal 17 at a second connection 18 of resistor 15. With *"domain"* a man skilled in the art means that a signal in the voltage domain comprises its information content in the amplitude or level of the voltage of the signal while a signal in the current domain comprises its information content in the amplitude or level of the current of the signal.

Antenna signal processing circuit 12 comprises an oscillator 19 to provide an oscillator signal 20 with the same frequency of 13,56MHz as the carrier frequency signal. Antenna signal processing circuit 12 furthermore comprises a mixer 21 connected to the second connection 18 of the passive resistor 15 to mix the current domain antenna signal 17 with oscillator signal 20 and to provide a mixed current domain antenna signal 22 at a mixer output connection 23.

Due to the fact that the frequency of the carrier frequency signal within the received antenna signal 11 is not synchronized with oscillator signal 20 a large DC-voltage may result depending on the phase difference between the antenna signal 11 and the oscillator signal 20. Antenna signal processing circuit 12 comprises a DC cancellation stage 24 connected to the mixer output connection 23 to avoid this large DC-voltage by injecting a compensating current into the mixed current domain antenna signal 22. The DC cancellation stage 24 is arranged in a loop and comprises a trans-impedance amplifier 25 to transfer the mixed current domain antenna signal 22 from the mixer output connection 23 into a mixed voltage domain antenna signal 26 which signal processed by a low pass filter 27 is transferred back into a filtered mixed current domain antenna signal 28 by a trans-conductance amplifier 29 of the DC cancellation stage 24 with the loop closed by a subtraction stage 30 to subtract the filtered mixed current domain antenna signal 28 from the mixed current domain antenna signal 22. The trans-impedance amplifier 25 is realized by an amplifier with a voltage output and the trans-conductance amplifier 29 is realized by an amplifier with a current output, both well known by a man skilled in the art.

After processing the mixed current domain antenna signal 22 by the loop of the DC cancellation stage 24, the mixed voltage domain signal 26 comprises the amplitude modulated data and higher frequency mixing products of n-times the carrier frequency. A filter stage 31 is used to cut-off the higher frequency mixing products and an amplifier stage 32 is used to amplify the amplitude modulated data within the processed antenna signal 13 provided to demodulator 14.

The antenna signal processing circuit 12 of system 7 is realized completely within integrated circuit 9, what provides several advantages compared to state of the art systems. The number of external components to be connected to the pins of the integrated circuit 9 is reduced what reduces the area on the printed circuit to implement the integrated circuit 9 and the costs linked to it. There is no need to adopt the integrated circuit 9 to different applications the integrated circuit 9 will be used for, as all practically possible voltages of the antenna signal 11 may be processed in the current domain without causing damages to integrated circuit 9. This also results in a high dynamic range and correct demodulated received data even in situations with a lot of noise covering the modulated data within antenna signal 11.

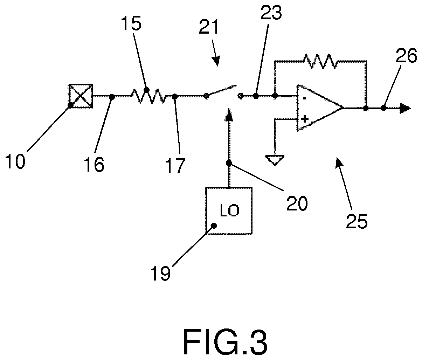

Figure 3 shows the principle of an antenna signal processing circuit 9 in a simple graphic. Mixer 21 is typically implemented as one or multiple switches controlled by oscillator signal 20 of oscillator 19. Trans-impedance amplifier 25 is typically implemented by an operational amplifier as shown in Figure 3.

System 7 as explained above realizes a method that processes the following steps: process the antenna signal 11 received from the antenna 8 and provide a processed antenna signal 13;
demodulate the processed antenna signal 13 and provide the received data;
feed the antenna signal 11 from the antenna 8 directly to an antenna input pin 10 of the integrated circuit 9 and process the high voltage of the antenna signal 11 within the integrated circuit 9 by a transfer of the antenna signal 11 into the current domain. This method provides the advantages as explained above in relation with system 7.

The system and method explained may be used wherever an antenna signal with a strong variation of the amplitude voltage of the antenna signal in all kind of different frequency ranges has to be processed within an integrated circuit.

## Claims

1. System of an antenna (8) and an integrated circuit (9) with at least one input pin (10) to receive an antenna signal (11) with a carrier frequency and to demodulate data modulated within the antenna signal (11), which system comprises an
antenna signal processing circuit (12) to process the antenna signal (11) from the antenna (8) and a
demodulator (14) to demodulate a processed antenna signal (13) and to provide the received data **characterized in, that**
the antenna signal processing circuit (12) realized within the integrated circuit (9) comprises a passive resistor (15) with a first connection (16) connected to the input pin (10) to transfer the high voltage of the antenna signal (11) into a current domain antenna signal (17) at a second connection (18) of the passive resistor (15), which passive resistor (15) is the only component of the integrated circuit (9) exposed to the high voltage of the antenna signal (11).

2. System according to claim 1, wherein the antenna (8) is directly connected to the input pin (10).

3. System according to claim 1 or claim 2, wherein the antenna signal processing circuit (12) comprises an oscillator (19) to provide an oscillator signal (20) with the frequency of the carrier signal and a mixer (21) connected to the second connection (18) of the passive resistor (15) to mix the current domain antenna signal (17) with the oscillator signal (20) and to provide a mixed current domain antenna signal (22) at a mixer output connection (23).

4. System according to claim 3, wherein the antenna signal processing circuit (12) comprises a DC cancellation stage (24) connected to the mixer output connection (23) and a filter stage (31) and an amplifier stage (32) to provide the processed antenna signal (13) to the demodulator (14).

5. System according to claim 4, wherein the DC cancellation stage (24) arranged in a loop comprises a trans-impedance amplifier (25) to transfer the mixed current domain antenna signal (22) from the mixer output connection (23) into a mixed voltage domain antenna signal (26) which signal processed by a low pass filter (27) is transferred back into a filtered mixed current domain antenna signal (28) by a trans-conductance amplifier (29) of the DC cancellation stage (24) with the loop closed by a subtraction stage (30) to subtract the filtered mixed current domain antenna signal (28) from the mixed current domain antenna signal (22).

6. System according to claim 5, wherein the DC cancellation stage (24) is connected to the filter stage (31) to provide the mixed voltage domain antenna signal (26) from the loop of the DC cancellation stage (24).

7. Method to receive an antenna signal (11) with a carrier frequency from an antenna (8) and to process it with an integrated circuit (9) to demodulate data modulated within the antenna signal (11), which method comprises the following steps:
process the antenna signal (11) received from the antenna (8) and provide a processed antenna signal (13);
demodulate the processed antenna signal (13) and provide the received data **characterized in, that** the method furthermore comprises the following steps:
process the high voltage of the antenna signal (11) within the integrated circuit (9) by a transfer of the antenna signal (11) into the current domain using a passive resistor (15) as the only component of the integrated circuit (9) exposed to the high voltage of the antenna signal (11).

8. Method according to claim 7, wherein the antenna signal (11) from the antenna (8) is directly fed to an input pin (10) of the integrated circuit (9).

9. Method according to claim 8, wherein the transfer of the antenna signal (11) into the current domain is realized by the passive resistor (15) connected to the input pin (10) and further processing of the antenna signal (11) in the current domain is realized by mixing it with an oscillator signal (20) with the frequency of the carrier signal.

10. Method according to claim 9, wherein a DC component of a mixed current domain antenna signal (22) is cut-off by a DC cancellation stage (12) in the voltage domain.

11. Reader (7) to demodulate an antenna signal (11) with a carrier frequency of 13,56MHz, **characterized in that** the reader (7) comprises a system of an antenna (8) and an integrated circuit (9) as claimed in any of the claims 1 to 6.

## Patentansprüche

1. System aus einer Antenne (8) und einer integrierten Schaltung (9) mit mindestens einem Eingangsstift (10) zum Empfangen eines Antennensignals (11) mit einer Trägerfrequenz und zum Demodulieren von innerhalb des Antennensignals (11) modulierten Daten, wobei das System
eine Antennensignal-Verarbeitungsschaltung (12) zum Verarbeiten des Antennensignals (11) von der Antenne (8) und
einen Demodulator (14) zum Demodulieren eines verarbeiteten Antennensignals (13) und zum Bereitstellen der empfangenen Daten umfasst,
**dadurch gekennzeichnet, dass** die innerhalb der integrierten Schaltung (9) ausgeführte Antennensignal-Verarbeitungsschaltung (12) einen passiven Widerstand (15) mit einem ersten Anschluss (16) umfasst, der mit dem Eingangsstift (10) verbunden ist, um die Hochspannung des Antennensignals (11) in ein Strombereich-Antennensignal (17) an einem zweiten Anschluss (18) des passiven Widerstands (15) zu übertragen, wobei der passive Widerstand (15) die einzige Komponente der integrierten Schaltung (9) ist, die der Hochspannung des Antennensignals (11) ausgesetzt ist.

2. System nach Anspruch 1, wobei die Antenne (8) direkt mit dem Eingangsstift (10) verbunden ist.

3. System nach Anspruch 1 oder Anspruch 2, wobei die Antennensignal-Verarbeitungsschaltung (12) einen Oszillator (19) umfasst, um einem Oszillatorsignal (20) die Frequenz des Trägersignals zu verleihen, sowie einen mit dem zweiten Anschluss (18) des passiven Widerstands (15) verbundenen Mischer (21) zum Mischen des Strombereich-Antennensignals (17) mit dem Oszillatorsignal (20) und zum Bereitstellen eines Mischstrombereich-Antennensignals (22) an einem Mischer-Ausgangsanschluss (23).

4. System nach Anspruch 3, wobei die Antennensignal-Verarbeitungsschaltung (12) eine mit dem Mischer-Ausgangsanschluss (23) verbundene Gleichstrom-Unterdrückungsstufe (24) und eine Filterstufe (31) sowie eine Verstärkerstufe (32) zum Liefern des verarbeiteten Antennensignals (13) an den Demodulator (14) umfasst.

5. System nach Anspruch 4, wobei die in einer Schleife angeordnete Gleichstrom-Unterdrückungsstufe (24) einen Transimpedanzverstärker (25) zum Übertragen des Mischstrombereich-Antennensignals (22) von dem Mischer-Ausgangsanschluss (23) in ein Mischspannungsbereich-Antennensignal (26) umfasst, wobei das von einem Tiefpassfilter (27) verarbeitete Signal durch einen Transkonduktanzverstärker (29) der Gleichstrom-Unterdrückungsstufe (24) in ein gefiltertes Mischstrombereich-Antennensignal (28) zurückübertragen wird, wobei die Schleife durch eine Subtraktionsstufe (30) zum Subtrahieren des gefilterten Mischstrombereich-Antennensignals (28) von dem Mischstrombereich-Antennensignal (22) geschlossen ist.

6. System nach Anspruch 5, wobei die Gleichstrom-Unterdrückungsstufe (24) mit der Filterstufe (31) verbunden ist, um das Mischspannungsbereich-Antennensignal (26) von der Schleife der Gleichstrom-Unterdrückungsstufe (24) bereitzustellen.

7. Verfahren zum Empfangen eines Antennensignals (11) mit einer Trägerfrequenz von einer Antenne (8) und zu dessen Verarbeitung mit einer integrierten Schaltung (9) zum Demodulieren von innerhalb des Antennensignals (11) modulierten Daten, wobei das Verfahren die folgenden Schritte umfasst:
Verarbeiten des von der Antenne (8) empfangenen Antennensignals (11) und Bereitstellen eines verarbeiteten Antennensignals (13);
Demodulieren des verarbeiteten Antennensignals (13) und Bereitstellen der empfangenen Daten,
**dadurch gekennzeichnet, dass** das Verfahren ferner die folgenden Schritte umfasst:
Verarbeiten der Hochspannung des Antennensignals (11) innerhalb der integrierten Schaltung (9) durch eine Übertragung des Antennensignals (11) in den Strombereich, wobei ein passiver Widerstand (15) als einzige Komponente der integrierten Schaltung (9) verwendet wird, die der Hochspannung des Antennensignals (11) ausgesetzt ist.

8. Verfahren nach Anspruch 7, wobei das Antennensignal (11) von der Antenne (8) direkt einem Eingangsstift (10) der integrierten Schaltung (9) zugeführt wird.

9. Verfahren nach Anspruch 8, wobei die Übertragung des Antennensignals (11) in den Strombereich durch den mit dem Eingangsstift (10) verbundenen passiven Widerstand (15) ausgeführt wird und die Weiterverarbeitung des Antennensignals (11) im Strombereich erzielt wird, indem es mit einem Oszillatorsignal (20) mit der Frequenz des Trägersignals gemischt wird.

10. Verfahren nach Anspruch 9, wobei eine Gleichstromkomponente eines Mischstrombereich-Antennensignals (22) durch eine Gleichstrom-Unterdrückungsstufe (12) im Spannungsbereich abgeschaltet wird.

11. Lesegerät (7) zum Demodulieren eines Antennensignals (11) mit einer Trägerfrequenz von 13,56 MHz, **dadurch gekennzeichnet, dass** das Lesegerät (7) ein System aus einer Antenne (8) und einer integrierten Schaltung (9) umfasst, wie in einem der Ansprüche 1 bis 6 beansprucht.

## Revendications

1. Système constitué d'une antenne (8) et d'un circuit intégré (9) avec au moins une broche d'entrée (10) pour recevoir un signal d'antenne (11) avec une fréquence porteuse et pour démoduler des données modulées dans le signal d'antenne (11), lequel système comprend
un circuit de traitement de signal d'antenne (12) pour traiter le signal d'antenne (11) provenant de l'antenne (8) et
un démodulateur (14) pour démoduler un signal d'antenne traité (13) et pour fournir les données reçues, **caractérisé en ce que**
le circuit de traitement de signal d'antenne (12) réalisé dans le circuit intégré (9) comprend une résistance passive (15) avec une première connexion (16) connectée à la broche d'entrée (10) pour transférer la haute tension du signal d'antenne (11) dans un signal d'antenne de domaine de courant (17) au niveau d'une seconde connexion (18) de la résistance passive (15), laquelle résistance passive (15) est le seul composant du circuit intégré (9) exposé à la haute tension du signal d'antenne (11).

2. Système selon la revendication 1, dans lequel l'antenne (8) est directement connectée à la broche d'entrée (10).

3. Système selon la revendication 1 ou la revendication 2, dans lequel le circuit de traitement de signal d'antenne (12) comprend un oscillateur (19) destiné à fournir un signal d'oscillateur (20) avec la fréquence du signal de porteuse et un mélangeur (21) connecté à la seconde connexion (18) de la résistance passive (15) pour mélanger le signal d'antenne de domaine de courant (17) avec le signal de l'oscillateur (20) et pour fournir un signal d'antenne de domaine de courant mixte (22) au niveau d'une connexion de sortie de mélangeur (23).

4. Système selon la revendication 3, dans lequel le circuit de traitement de signal d'antenne (12) comprend un étage d'annulation de courant continu (24) connecté à la connexion de sortie de mélangeur (23) et un étage de filtrage (31) et un étage amplificateur (32) pour fournir le signal d'antenne traité (13) au démodulateur (14).

5. Système selon la revendication 4, dans lequel l'étage d'annulation de courant continu (24) agencé en une boucle comprend un amplificateur de trans-impédance (25) pour transférer le signal d'antenne de domaine de courant mixte (22) de la connexion de sortie de mélangeur (23) jusque dans signal d'antenne de domaine de tension mixte (26), lequel signal traité par un filtre passe-bas (27) est retransféré dans un signal d'antenne de domaine de courant mixte filtré (28) par un amplificateur à transconductance (29) de l'étage d'annulation de courant continu (24) avec la boucle fermée par un étage de soustraction (30) pour soustraire le signal d'antenne de domaine de courant mixte filtré (28) à partir du signal d'antenne de domaine de courant mixte (22).

6. Système selon la revendication 5, dans lequel l'étage d'annulation de courant continu (24) est connecté à l'étage de filtrage (31) pour fournir le signal d'antenne de domaine de tension mixte (26) à partir de la boucle de l'étage d'annulation de courant continu (24).

7. Méthode pour recevoir un signal d'antenne (11) avec une fréquence de porteuse à partir d'une antenne (8) et le traiter avec un circuit intégré (9) pour démoduler des données modulées dans le signal d'antenne (11), laquelle méthode comprend les étapes suivantes :
traiter le signal d'antenne (11) reçu à partir de l'antenne (8) et fournir un signal d'antenne traité (13) ;
démoduler le signal d'antenne traité (13) et fournir les données reçues, **caractérisé en ce que** le procédé comprend en outre les étapes suivantes :
traiter la haute tension du signal d'antenne (11) dans le circuit intégré (9) en transférant le signal d'antenne (11) dans le domaine de courant en utilisant une résistance passive (15) en tant que composant unique du circuit intégré (9) exposé à la haute tension du signal d'antenne (11).

8. Méthode selon la revendication 7, dans laquelle le signal d'antenne (11) provenant de l'antenne (8) est directement alimenté vers une broche d'entrée (10) du circuit intégré (9).

9. Méthode selon la revendication 8, dans laquelle le transfert du signal d'antenne (11) jusque dans le domaine de courant est réalisé par la résistance passive (15) connectée à la broche d'entrée (10) et un traitement supplémentaire du signal d'antenne (11) dans le domaine de courant est réalisé en le mélangeant avec un signal d'oscillateur (20) avec la fréquence du signal de porteuse.

10. Méthode selon la revendication 9, dans lequel une composante de courant continu d'un signal d'antenne de domaine de courant mixte (22) est coupée par un étage d'annulation de courant continu (12) dans le domaine de tension.

11. Lecteur (7) pour démoduler un signal d'antenne (11) avec une fréquence de porteuse de 13,56 MHz, **caractérisé en ce que** le lecteur (7) comprend un système constitué d'une antenne (8) et d'un circuit intégré (9) selon l'une quelconque des revendications 1 à 6.
